# EUROPÄISCHE PATENTANMELDUNG

(11) **EP 1 215 069 A2**
(43) Veröffentlichungstag der Anmeldung: **19.06.2002**
(21) Anmeldenummer: 01121974.8
(22) Anmeldetag: 13.09.2001
(51) Int. Cl.: B60K 15/035

(54) **Tankentlüftungseinheit für einen Kraftstofftank einer Brennkraftmaschine**

(30) Priorität: 15.12.2000 DE 10062676
(71) Anmelder: Pierburg Aktiengesellschaft, 41460 Neuss (DE)
(72) Erfinder: Buse, Werner, 41564 Kaarst (DE); Krause, Harald, 41515 Grevenbroich (DE)
(74) Vertreter: Ter Smitten, Hans

(57) **Zusammenfassung**

Tankentlüftungseinheit für einen Kraftstofftank einer Brennkraftmaschine mit zumindest einem Entlüftungsauslaß, der zu einem Entlüftungsventil führt, das wiederum über eine Entlüftungsleitung mit einem Aktivkohlefilter fluidisch verbunden ist, wobei ein Betankungsentlüftungsauslaß (3) und ein Betriebsentlüftungsauslaß (4) vorgesehen sind, die mit jeweils einem Betankungsentlüftungseinlaß (13) und Betriebsentlüftungseinlaß (14) des Entlüftungsventils (5) kommunizieren, wobei während des Betankungsvorganges der Betriebsentlüftungsauslaß (14) und während des Betriebszustandes der Betankungsentlüftungsauslaß (13) geschlossen ist.

## Beschreibung

Die Erfindung betrifft eine Tankentlüftungseinheit für einen Kraftstofftank einer Brennkraftmaschine mit zumindest einem Entlüftungsauslaß, der zu einem Entlüftungsventil führt, das wiederum über eine Entlüftungsleitung mit einem Aktivkohlefilter fluidisch verbunden ist.

Eine derartige Tankentlüftungseinheit ist beispielsweise aus der DE - A1 - 199 30 926 bekannt und besteht aus einem Kraftstofftank, der über eine einzige, sowohl der Betriebs- als auch der Betankungsentlüftung dienenden Entlüftungsleitung mit einem Aktivkohlefilter verbunden ist, wobei die Entlüftungsleitung ein Entiüftungsventil aufweist, das in eine Offen- und in eine Schließstellung betätigbar ist. Dabei soll sowohl während des Fahrbetriebes, als auch beim Betankungsvorgang aus dem Tank austretendes Kraftstoffdampf-Luft-Gemisch (Entlüftungsgas) zum Aktivkohlefilter geleitet werden, der das Entlüftungsgas auffängt und den im Aktivkohlefilter adsorbierten Kraftstoff zum Motor führt. Eine zunehmende Begrenzung der zulässigen CH - Emissionen (ULEF, SULEF- und ZERO-EVAP-Vorschriften) führt dazu, daß auch die bei der Betankung frei werdende CH - Gasmenge durch den Aktivkohlefilter geleitet werden muß, wobei der Tankeinfüllstutzen gegenüber der Zapfpistole abgedichtet sein soll, damit kein Gas an der Zapfpistole vorbei in die Atmosphäre entweicht. Dem entsprechend groß im Durchmesser muß dann auch der Entlüftungsauslaß des Kraftstofftankes bemessen sein. Der Entlüftungsauslaß der Tankentlüftungseinheit gemäß dem o. g. Stand der Technik muß andererseits wieder so klein bemessen sein, daß ein Übertritt von Kraftstoff während der Betriebsphase der Brennkraftmaschine ausgeschlossen ist. Um diese Problematik zu umgehen, ist es des weiteren bekannt, zwei Entlüftungsleitungen zum Aktivkohlefilter vorzusehen, wobei diese beiden Leitungen mechanisch oder elektromagnetisch durch eine Umschalteinrichtung frei geschaltet werden. Diese Ausführung einer Tankentlüftungseinheit ist jedoch in konstruktiver Hinsicht sehr aufwendig und besitzt darüber hinaus den Nachteil, daß weitere Verbindungsstellen geschaffen worden sind, die derart abgedichtet werden müssen, daß die o. g. Vorschriften erfüllt werden.

Davon ausgehend liegt der Erfindung die Aufgabe zugrunde, eine Tankentlüftungseinheit zu schaffen, die die o. g. Nachteile vermeidet.

Diese Aufgabe wird durch eine Tankentlüftungseinheit dadurch gelöst, daß ein Betankungsentlüftungsauslaß und ein Betriebsentlüftungsauslaß vorgesehen sind, die mit jeweils einem Betankungsentlüftungseinlaß und Betriebsentlüftungseinlaß des Entlüftungsventils kommunizieren, wobei während des Betankungsvorganges der Betriebsentlüftungsauslaß und während des Betriebsstandes der Betankungsentlüftungsauslaß geschlossen ist.

Durch diese Ausführung wird auf konstruktiv einfache und kostengünstige Weise eine Tankentlüftungseinheit geschaffen, die einen dem jeweiligen Entlüftungszustand angepaßten Strömungsquerschnitt definiert, so daß einerseits beim Tankvorgang genügend Kraftstoffdampf abgeführt werden kann, und im Betriebszustand auch bei Extremlagen kein Kraftstoff über die Entlüftungsleitung den Kraftstofflank verlassen kann. Im besonders vorteilhafter Weise ist das Entlüftungsventil derart am Kraftstofftank angeordnet, daß der Betankungsentlüftungsauslaß und der Betriebsentlüftungsauslaß des Kraftstofftankes mit den dementsprechenden Entlüftungseinlässen des Entlüftungsventils übereinstimmt. Auf diese Weise können leckageanfällige Schlauchleitungen zwischen Kraftstofftank und Entlüftungsventil entfallen.

Dabei kann das Entlüftungsventil für eine derartige Tankentlüftungseinheit vorteilhafter Weise als 3/2 - Wege - Ventil ausgeführt sein, wobei der Betankungsentlüftungseinlaß und der Betriebsentlüftungseinlaß unterschiedlich dimensioniert sind. Dabei können für das Entlüftungsventil zwei Ventilstößel mit jeweils einem Ventilverschlußkörper vorgesehen sein. Die Ventilstößel sind dabei vorteilhafter Weise achsparallel anzuordnen und können starr miteinander verbunden sein. In diesem Falle braucht lediglich einer der Ventilstößel elektromagnetisch antreibbar zu sein.

Dadurch, daß der Ventilverschlußkörper für den Betankungsentlüftungseinlaß kardanisch am zugehörigen Ventilstößel gelagert ist, ist ein gasdichter Verschluß des einen großen Strömungsdurchmesser aufweisenden Betankungsentlüftungseinlasses während des Betriebszustandes gewährleistet. Ein Spulenkörper des elektromagnetischen Antriebes ist als Kunststoffspritzteil ausgeführt, in dem ein mit dem Ventilstößel gekoppelter Anker verschiebbar gelagert ist.

Um beim Betankungsvorgang oder bei extremer Schieflage des Fahrzeuges ein Austreten von Kraftstoff in dem Betankungsentlüftungseinlaß zu verhindern, ist am Betankungsentlüftungseinlaß eine Schwimmer - Sicherung vorgesehen.

Nachfolgend wird die Erfindung anhand eines in der Zeichnung dargestellten Ausführungsbeispiels näher erläutert.

Es zeigen:
- Figur 1: eine schematische Ansicht der erfindungsgemäßen Tankentlüftungseinheit, und
- Figur 2: eine Schnittansicht eines erfindungsgemäßen Entlüftungsventils.

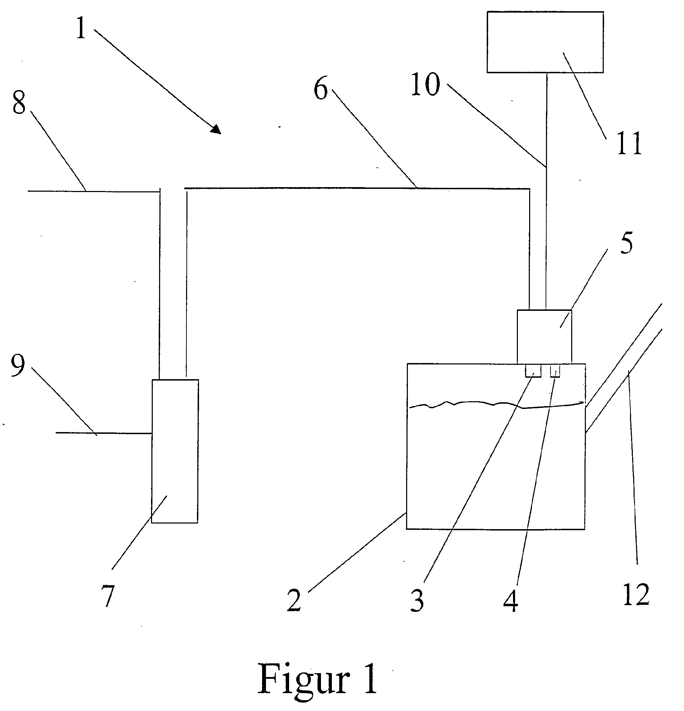

Figur 1 zeigt schematisch eine Tankentlüftungseinheit 1 für einen Kraftstofftank 2 einer nicht dargestellten Brennkraftmaschine. Zwei schematisch angedeutete Entlüftungsauslässe 3, 4 führen zu einem Entlüftungsventil 5, das über eine Entlüftungsleitung 6 mit einem Aktivkohlefilter 7 verbunden ist. Der Aktivkohlefilter 7 weist wiederum auf bekannte Weise eine zur Brennkraftmaschine führende Regenerierleitung 8 sowie eine Spülleitung 9 auf. Das Entlüftungsventil ist über eine Steuerleitung 10 mit einer Steuereinrichtung 11 verbunden, die das Entlüftungsventil derart ansteuert, daß beim Betankungsvorgang der Betankungsentlüftungsauslaß 3 und während des Fahrbetriebes der Betriebsentlüftungsauslaß 4 frei geschaltet ist. Die Ansteuerung des Steuergerätes kann dabei auf bekannte Weise durch einen Kontakt an einem Tankstutzen 12 erfolgen.

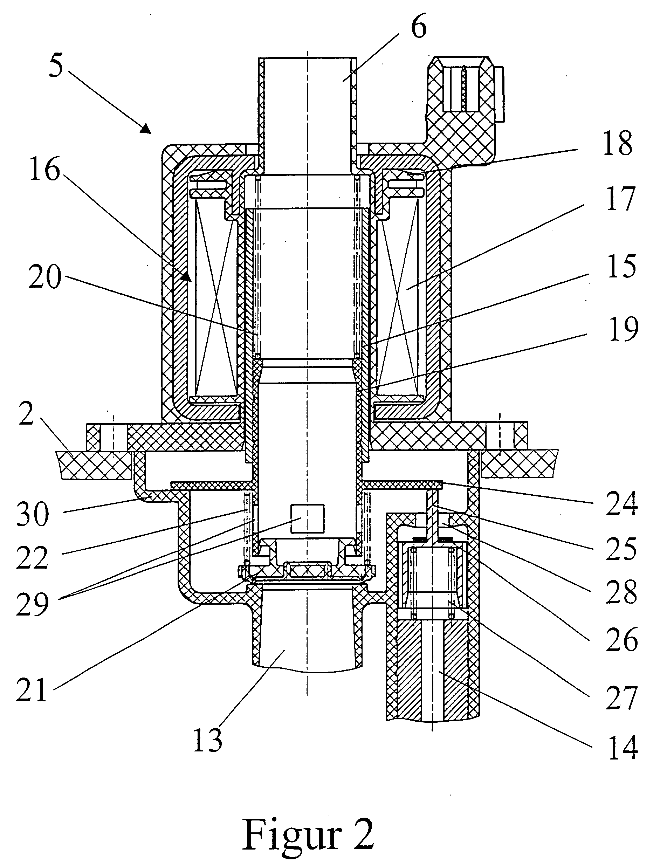

Figur 2 zeigt das Entlüftungsventil 5 in einer Schnittansicht. Das Entlüftungsventil 5 ist ein 3/2 - Wege - Ventil bei dem im vorliegenden Fall ein Betankungsentlüftungseinlaß 13 und ein Betriebsentlüftungseinlaß 14 mit dem Betankungsentlüftungsauslaß und dem Betriebsentlüftungsauslaß 4 übereinstimmen und derart achsparallel im Brennstofftank 2 angeordnet sind, daß eine Abströmung des Entlüftungsgases durch einen Anker 15 eines elektromagnetischen Antriebes 16 in die Entlüftungsleitung 6 erfolgt.

Der elektromagnetische Antrieb 16 mit einer Wicklung 17, die in einem kraftstoffdichten Kunststoffspritzteil angeordnet ist, ist außerhalb des Brennstofftanks 2 angeordnet. Der Anker 15 ist im vorliegenden Fall formschlüssig mit einem ersten Ventilstößel 19 verbunden, der durch eine Feder 20, die sich am Spulenkörper 18 abstützt in Richtung des Betankungsentlüftungseinlasses 13 vorgespannt ist. Des weiteren weist der erste Ventilstößel 19 einen kardanisch gelagerten Ventilverschlußkörper 21 auf, der seinerseits durch eine Feder 22 gegenüber dem Ventilstößel 19 vorgespannt ist. Auf diese Weise verschließt der Ventilverschlußkörper 21 im unbestromten Zustand den Betankungsentlüftungseinlaß 13.

Der erste Ventilstößel 19 weist ein umlaufendes Kragenelement 24 auf, an dem wiederum ein zweiter Ventilstößel 25 angeordnet ist, der wiederum einen Ventilverschlußkörper 26 besitzt, der den Betriebsentlüftungskanal 14 verschließen kann. Dabei weist der Betriebsentlüftungseinlaß 14 einen wesentlich kleineren Strömungsquerschnitt auf als der Betankungsentlüftungseinlaß 13. Auch der Ventilverschlußkörper 26 ist durch eine Feder 27 gegenüber einer Durchtrittsöffnung 28, die gleichzeitig die Durchtrittsöffnung für den zweiten Ventilstößel 25 bildet, vorgespannt. Bei Strombeaufschlagung ist die Betriebsentlüftung damit geschlossen und der Betankungsentlüftungseinlaß 13 geöffnet, so daß das vom eingefüllten Kraftstoff verdrängte Gas über den großen Strömungsquerschnitt des Betankungsentlüftungseinlasses 13 zum Aktivkohlefilter 7 geführt werden kann. Bei gefülltem Brennstofftank schließt auf bekannte Weise eine nicht dargestellte Schwimmersicherung den Betankungsentlüftungseinlaß 13. Sowohl bei Betriebsentlüftung also bei Betankungsentlüftung strömt das Entlüftungsgas über Durchtrittsöffnungen 29 im ersten Ventilstößel 19 zur Entlüftungsleitung 6. Vorteilhafter weise sind dabei der Betankungsentlüftungseinlaß 13 und der Betriebsentlüftungseinlaß 14 Bestandteil eines Deckelelementes 30, das mit dem außerhalb des Brennstofftankes 2 liegenden Spulenkörper kraftstoffdicht verschweißt ist.

## Patentansprüche

1. Tankentlüftungseinheit für einen Kraftstofftank einer Brennkraftmaschine mit zumindest einem Entlüftungsauslaß, der zu einem Entlüftungsventil führt, das wiederum über eine Entlüftungsleitung mit einem Aktivkohlefilter fluidisch verbunden ist,
**dadurch gekennzeichnet, daß** ein Betankungsentlüftungsauslaß (3) und ein Betriebsentlüftungsauslaß (4) vorgesehen sind, die mit jeweils einem Betankungsentlüftungseinlaß (13) und Betriebsentlüftungseinlaß (14) des Entlüftungsventils (5) kommunizieren, wobei während des Betankungsvorganges der Betriebsentlüftungsauslaß (14) und während des Betriebszustandes der Betankungsentlüftungsauslaß (13) geschlossen ist.

2. Tankentlüftungseinheit nach Anspruch 1, **dadurch gekennzeichnet, daß** das Entlüftungsventil (5) derart am Kraftstofftank (2) angeordnet ist, daß der Betankungsentlüftungsauslaß (3) und der Betriebsentlüftungsauslaß (4) des Kraftstofftankes (2) mit den dementsprechenden Entlüftungseinlässen (13, 14) des Entlüftungsventils (5) übereinstimmen.

3. Entlüftungsventil für eine Tankentlüftungseinheit nach Anspruch 2, **dadurch gekennzeichnet, daß** das Entlüftungsventil (5) als 3/2-Wegeventil ausgeführt ist, wobei der Betankungsentlüftungseinlaß (13) und der Betriebsentlüftungseinlaß (14) unterschiedlich dimensioniert sind.

4. Entlüftungsventil nach Anspruch 3, **dadurch gekennzeichnet, daß** zwei Ventilstößel (19, 25) mit jeweils einem Ventilverschlußkörper (21, 26) vorgesehen sind.

5. Entlüftungsventil nach Anspruch 4, **dadurch gekennzeichnet, daß** die Ventilstößel (19, 25) achsparallel angeordnet sind.

6. Entlüftungsventil nach Anspruch 4 oder 5, **dadurch gekennzeichnet, daß** die Ventilstößel (19, 25) starr miteinander verbunden sind.

7. Entlüftungsventil nach Anspruch 6, **dadurch gekennzeichnet, daß** einer der Ventilstößel (19, 25) elektromagnetisch antreibbar ist.

8. Entlüftungsventil nach einem der Ansprüche 3 bis 7, **dadurch gekennzeichnet, daß** der Ventilverschlußkörper (21) für den Betankungsentlüftungseinlaß (13) kardanisch am zugehörigen Ventilstößel (19) gelagert ist.

9. Entlüftungsventil nach Anspruch 7 oder 8, **dadurch gekennzeichnet, daß** ein Spulenkörper (18) als Kunststoffspritzteil ausgeführt ist, in dem ein mit dem Ventilstößel (19) gekoppelter Anker (15) verschiebbar gelagert ist.

10. Entlüftungsventil nach einem der Ansprüche 3 bis 9, **dadurch gekennzeichnet, daß** der Betankungsentlüftungseinlaß (13) eine Schwimmer-Sicherung aufweist.
